# EUROPEAN PATENT SPECIFICATION

(11) **EP 3 601 854 B1**
(45) Date of publication and mention of the grant of the patent: **07.09.2022**
(21) Application number: 17902299.1
(22) Date of filing: 22.12.2017
(51) Int. Cl.: F16J 15/34, F16J 15/32, F15D 1/00, F15D 1/02, F15D 1/08, F16J 15/16, F16J 15/54

(54) **SHOCK WAVE MECHANICAL SEAL**
MECHANISCHE STOSSWELLENDICHTUNG
JOINT MÉCANIQUE À ONDE DE CHOC

(30) Priority: 20.03.2017 US 201762473535 P
(43) Date of publication of application: 05.02.2020
(73) Proprietor: Flowserve Management Company, Irving, TX 75039 (US)
(72) Inventor: GUAN, Cheng-Kang, Irving, Texas 75039 (US); NELSON, Daniel A., Irving, Texas 75039 (US)
(74) Representative: Petraz, Gilberto Luigi
(86) International application number: PCT/US2017/068095
(87) International publication number: WO 2018/174980

(56) References cited:
- WO-A1-2010/133126
- WO-A1-2014/162688
- JP-A- 2006 177 500
- KR-B1- 101 066 295
- US-A1- 2011 024 987
- US-A1- 2012 156 015
- US-A1- 2016 053 895

## Description

### RELATED APPLICATIONS

This application claims the benefit of U.S. Provisional Application No. 62/473,535, filed March 20, 2017.

### FIELD OF THE INVENTION

The invention relates to mechanical seals, and more particularly, to mechanical seals used to seal high pressure compressible fluids.

### BACKGROUND OF THE INVENTION

Mechanical seals are commonly used in many applications to minimize the leakage of a pressurized fluid through the gap between rotating and stationary components in rotating shaft equipment such as pumps and compressors. A mechanical seal typically comprises a rotating "sealing" ring located parallel with and closely adjacent to a stationary sealing ring, such that only a very small amount of the contained fluid passes through the gap between them. The gap between the adjacent faces of the sealing rings is controlled to a very tight tolerance, typically on the order of less than 10 microns and in some cases less than 1 micron. This small gap induces large viscous stresses on the fluid that enters the gap, thereby reducing the fluid pressure as the fluid travels through the gap between the seal faces. Reducing the fluid pressure in this way results in a very small fluid flow rate through the gap, thus effectively sealing the fluid without requiring physical contact between the sealing rings.

A major byproduct of the viscous stress imposed on the fluid in the gap between the sealing rings is viscous heating, which can lead to overheating of the seal and chemical breakdown of the fluid. This heating typically has a significant influence on the design of the seal face in terms of material selection, geometry, and manufacturing.

This traditional approach to mechanical seals becomes less efficient as the pressure of the sealed fluid increases, and its viscosity decreases, making it very difficult to seal high pressure and ultrahigh pressure compressible fluids. Document WO-A-2010/133126 describes a known gas wave refrigerator with a sealing structure.

What is needed, therefore, is a mechanical seal that is more efficient and effective in sealing high pressure and ultrahigh pressure compressible fluids than traditional mechanical seals.

### SUMMARY OF THE INVENTION

The present invention is a rotating shaft seal that is structurally analogous to a conventional mechanical seal, but which functions according to a fundamentally different physical principle that enables it to be more efficient and effective than traditional mechanical seals in sealing high temperature compressible fluids. As with a traditional mechanical seal, the seal of the present invention comprises a rotating "sealing" ring located parallel with and closely adjacent to a stationary sealing ring, such that the pressurized fluid can only escape from the sealed volume by passing through the gap between the seal faces. As with a conventional mechanical seal, there is a significant reduction of the fluid pressure within the gap, thereby ensuring that only a very small amount of the contained fluid passes through the gap.

However, instead of relying on viscous stresses to reduce the pressure of the fluid that leaks between the seal faces, the seal of the present invention reduces the pressure of the compressible fluid within the gap by causing it to be accelerated to supersonic conditions and then to undergo shockwaves that reduce the stagnation pressure of the fluid. This approach substantially reduces viscous heating, and enables large pressure differentials, and thereby effective seals, to be established over distances within the seal face gap that are much shorter than for conventional mechanical seals.

Specifically, the high pressure compressible fluid is caused to pass through a converging segment where the gap narrows, followed by a diverging segment where the gap widens. The converging and diverging segments can be either axial or radial, and can be provided on the seal faces and/or on other seal parts such as bushings. Within each section, the fluid is thereby accelerated to a supersonic condition, such that a shockwave is induced shortly after the fluid enters the diverging segment. The stagnation pressure of the fluid is consequently decreased by the action of the shockwave, causing a backpressure that significantly reduces leakage of the fluid through the gap.

The number and the dimensions of the converging/diverging sections included in each embodiment are determined according to the fluid pressure within the sealed volume and the desired relative pressure drop.

In various embodiments, the converging-diverging geometry of each section is imposed on one or both of the seal faces. In embodiments, the converging-diverging sections are located near the edges of the seal faces where the pressurized fluid from the sealed fluid volume enters the gap between the seal faces.

In some embodiments, the seal faces and/or other seal parts that provide the converging/diverging sections are configured axially, for example in a configuration typical of a bushing, while in other embodiments they are configured radially, for example in a configuration typical of a mechanical seal. In various axial embodiments, the stationary seal face is the inner diameter of a stationary component that surrounds a shaft, while the rotary seal face is the outer diameter of a rotating component that surrounds and is fixed to the shaft. In various radial embodiments, the seal faces are axially adjacent to each other, with one sealing ring being attached and sealed to the rotating shaft, and the other being attached and sealed to the stationary assembly.

### Principle of Operation

Within each converging-diverging section of the disclosed seal, the compressible fluid is first accelerated within the converging segment as the gap narrows, until it reaches the minimum gap clearance. At this location, the fluid reaches a "choked" condition, where the fluid velocity cannot increase beyond Mach 1. As the fluid enters the diverging segment, the gap widens, further accelerating the flow to a supersonic condition, whereupon back-pressure imposed by downstream sections induce a standing normal shockwave in the diverging segment. Although the static pressure of the fluid after the shockwave is much higher than the static pressure immediately upstream of the shockwave, the stagnation pressure of the fluid is greatly reduced, and is a function of the maximum Mach number that is reached in the diverging segment before the shock wave. The amount of pressure drop in each section is therefore limited by the maximum Mach number that is achievable in each section.

In some embodiments, a Mach number of 4 or higher can tend to result in dissociation of the fluid within the shockwave and along the walls, and may begin to cause significant viscous heating effects on the walls. Accordingly, embodiments are designed such that the maximum Mach number of each section is 3 or less. Under these conditions, each section results in a pressure drop of approximately 50%. Thus, to achieve a desired pressure drop across the seal faces, the number of converging-diverging sections is selected according to the requirements of the embodiment, with higher sealed fluid pressures typically requiring a greater number of converging-diverging sections.

Of course, the requirement to achieve supersonic acceleration depends upon the fluid remaining compressible, and does not, for example, condense into in incompressible liquid or solid. As such, the number of converging-diverging sections may be limited if the fluid pressure drops below the minimum pressure and temperature that are required to maintain compressibility. In embodiments, the amount of fluid leakage through the seal is determined by the first converging-diverging section's minimum gap width and area.

If it is desirable to combine the shockwave pressure reduction method disclosed herein with viscous-effect pressure reduction, then the seal faces can be extended downstream of the converging-diverging sections so as to further reduce the fluid pressure due to viscous dissipation. Similarly, a seal operating according to the principles disclosed here can be used as a "pre-conditioner," much like a throttle bushing, in combination with a conventional downstream fluid seal. In this way, a seal of the present invention can be used to enable existing seal technology that is well proven for sealing fluids at lower pressures to be applied in ultra-high pressure applications.

### Advantages

The present invention provides at least two significant technical advantages as compared to prior art mechanical seals. The first is the significant reduction in viscous heating associated with the action of the shockwaves that reduce the fluid pressure. Although some viscous heating is unavoidable due to the small gap clearances required by the invention, the principle by which the invention operates does not depend upon viscous effects (other than the shockwaves) to reduce the fluid pressure, and so embodiments can be designed to minimize viscous heating. The second advantage is the short length scale of the converging-diverging seal features, which can allow the seal faces to be scaled to very small sizes, reducing material costs and product envelopes.

The present invention is a mechanical seal configured for sealing a pressurized, compressible fluid. The seal includes a rotating sealing ring surrounding a rotating shaft, the rotating sealing ring being rotationally cooperative with and sealed to the rotating shaft, a stationary sealing ring cooperative with and sealed to a housing that is penetrated by the rotating shaft, a stationary seal face of the stationary sealing ring being substantially parallel to a rotating seal face of the rotating sealing ring, the rotating and stationary seal faces being separated by an annular seal gap, and at least one annular shock inducing section included in the seal gap, the shock-inducing section including an annular converging segment within which a radial cross section of the seal gap narrows with increasing radius and an annular diverging segment within which the radial cross section of the seal gap widens with increasing radius, the diverging segment being adjacent to and radially outward from the converging segment, so that a local minimum in seal gap width, referred to herein as a "choke point," is formed between the converging segment and the diverging segment, the converging and diverging segments being configured to cause the compressible fluid when flowing radially outward through the seal gap to be accelerated within the shock-inducing section into a supersonic state, so that a shockwave is formed by the fluid within the diverging segment, thereby reducing a stagnation pressure of the fluid.

In embodiments, the seal gap includes a plurality of adjacent shock-inducing sections.

In any of the preceding embodiments, at least one of the narrowing and widening of each segment of each shock-inducing section can be due to shaping of at least one of the rotating seal face and the stationary seal face.

In any of the preceding embodiments, a combined width of the shock-inducing sections can be between 0.01 centimeters and 0.02 centimeters (0.004 inches and 0.008 inches).

In any of the preceding embodiments, the shock-inducing sections can be located proximal to a boundary of the seal gap where the pressurized fluid enters the seal gap.

In any of the preceding embodiments, the mechanical seal can be axially configured, such that the seal faces are parallel to the rotating shaft, the rotating seal face being radially inward of the stationary seal face, or it can be radially configured, such that the seal faces are perpendicular to the rotating shaft, the rotating and stationary faces being axially offset from each other.

In any of the preceding embodiments, the shock-inducing sections can be configured to cause fluid flowing outward through the seal gap to be accelerated into a supersonic state having a Mach number of less than 4.

Any of the preceding embodiments can further include a concentric, viscosity-inducing section included in the seal gap outward from the at least one shock-inducing section, the seal faces in the viscosity-inducing section being flat and parallel to each other, and being configured to induce viscous stresses on the fluid within the seal gap, thereby further reducing the stagnation pressure of the fluid.

The features and advantages described herein are not all-inclusive and, in particular, many additional features and advantages will be apparent to one of ordinary skill in the art in view of the drawings, specification, and claims. Moreover, it should be noted that the language used in the specification has been principally selected for readability and instructional purposes, and not to limit the scope of the inventive subject matter.

### BRIEF DESCRIPTION OF THE DRAWINGS

Fig. 1 is a cross-sectional side view of a shock wave mechanical seal in an axial configuration according to an embodiment of the present invention;
Fig. 2 is a cross-sectional side view illustrating air flow through a single converging-diverging section in an embodiment of the present invention;
Fig. 3 is a cross-sectional side view of a shock wave mechanical seal in a radial configuration according to an embodiment of the present invention;
Fig. 4 is a cross-sectional side view illustrating series of three converging-diverging sections in an axial embodiment that is suitable for CO2 at 1300 degrees Fahrenheit and 4400 psi pressure;
Fig. 5 is a series of side views that illustrate dimensions of the seal gap in a radial embodiment;

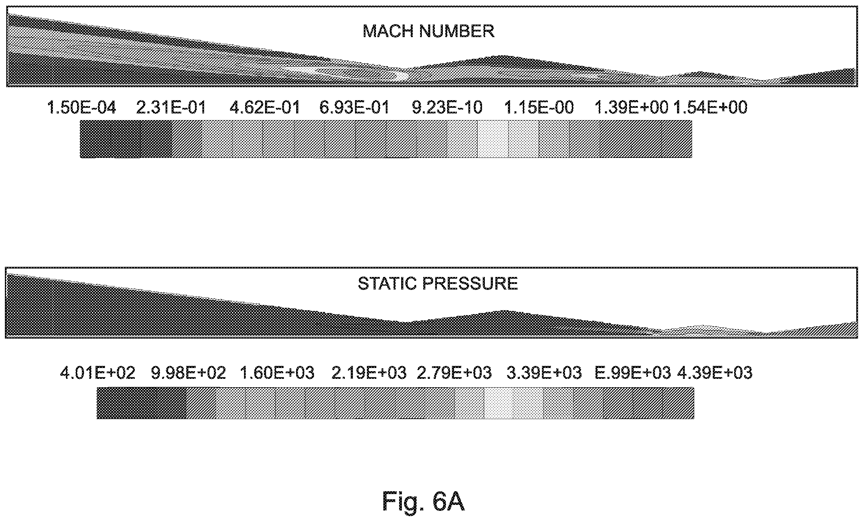

Fig. 6A is a graph rendered in color that presents Mach number and pressure results of a flow simulation of an axial configuration similar to Fig. 5;

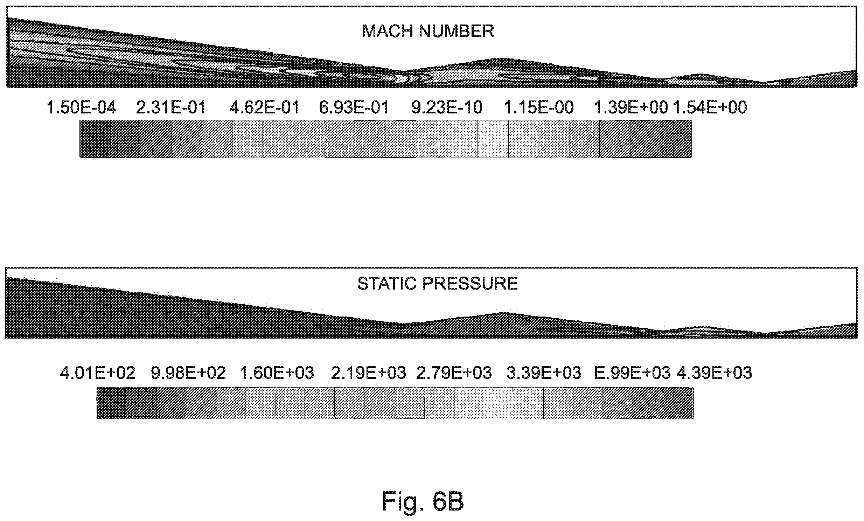

Fig. 6B presents the graph of Fig. 6A rendered in half-toned format;
Fig. 7 is a graph that illustrates the pressure loss across the sealing surface in the simulation of Fig's 6A and 6B;
Fig. 8 is a graph that illustrates changes in temperature across the sealing surface of the simulation of Fig's 6A and 6B; and
Fig. 9 is an expansion of the graph of Fig. 8 in the contoured region of the converging-diverging sections.

### DETAILED DESCRIPTION

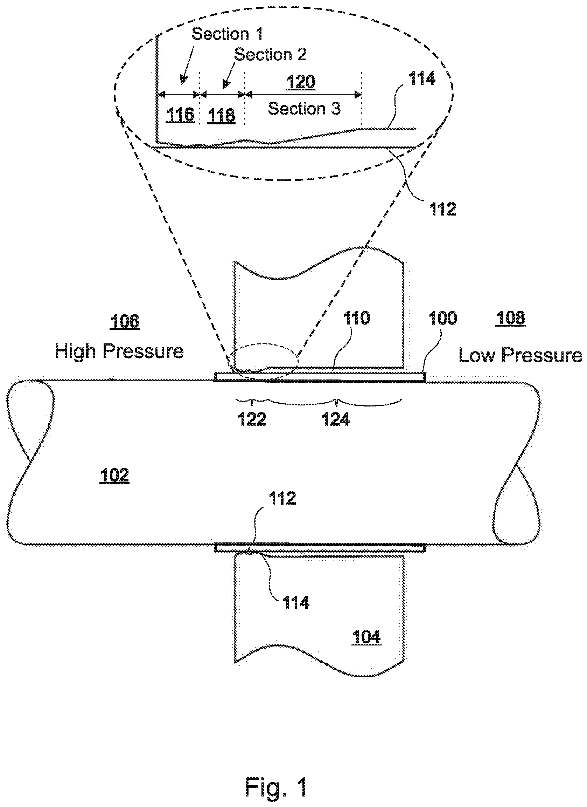

The present invention is a rotating shaft seal that is structurally analogous to a mechanical seal, but which functions according to a fundamentally different physical principle that enables it to be more efficient and effective in sealing high temperature fluids than traditional mechanical seals. With reference to Fig. 1, and in analogy with a conventional mechanical seal, a rotating "sealing" ring 100 is fixed to a rotating shaft 102 and is located parallel with and closely adjacent to a stationary sealing ring 104 that is fixed to a housing or other surrounding, stationary structure.

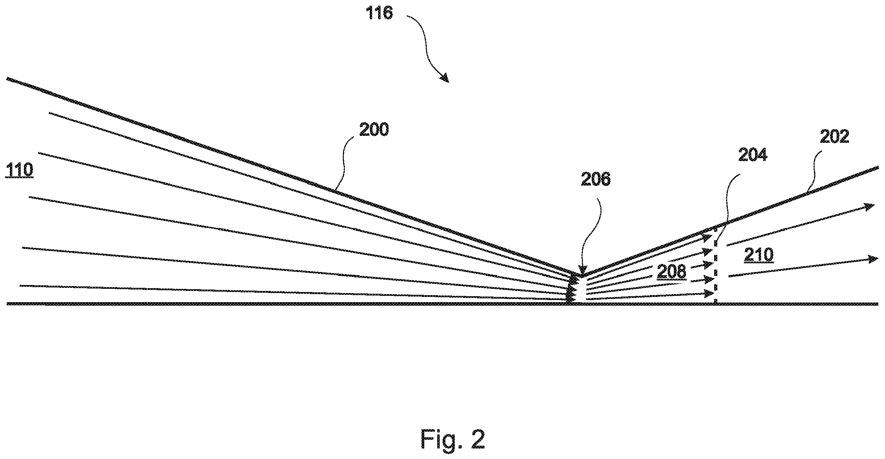

According to the present invention, the seal is configured such that the pressurized compressible fluid can only escape from the sealed volume 106 to the surrounding, lower pressure environment 108 by passing through the gap 110 between the seal faces 112, 114. The high pressure fluid entering the gap 110 between the seal faces112, 114 passes through one or more annular sections 116, 118, 120. The structure of one of these sections 116 is enlarged in Fig. 2. Each section includes a converging segment 200 within which the gap 110 narrows, followed by a diverging segment 202 within which the gap 110 widens. Within each section 116, 118, 120, the fluid is thereby accelerated to a supersonic condition, such that a shockwave 204 is induced shortly after the fluid enters the diverging segment 202. The stagnation pressure of the fluid is consequently decreased by the action of the shockwave, causing a backpressure that significantly reduces leakage of the fluid through the gap.

The dimensions and the number of converging/diverging sections included in each embodiment are determined according to the fluid pressure within the sealed volume 106 and the desired relative pressure drop. For example, the embodiment of Fig. 1 includes three sections 116, 118, 120, and the overall length of the converging-diverging sections is between 0.004 and 0.008 inches.

In the embodiment of Fig's 1 and 2, the converging-diverging geometry of each section is imposed on the stationary seal face. In various other embodiments, the converging-diverging geometry of each section is imposed on the rotating seal face, or on both of the seal faces. The configuration can be different for each section. For example, some embodiments are configured such that the converging-diverging geometry is imposed only on the stationary seal face in a first section, only on the rotating seal face in a second section, and on both seal faces in a third section. In the embodiment of Fig's 1 and 2, the converging-diverging sections 116 118, 120, are located near the edges of the seal faces 112, 114, where the fluid enters the seal gap from the sealed fluid volume 106.

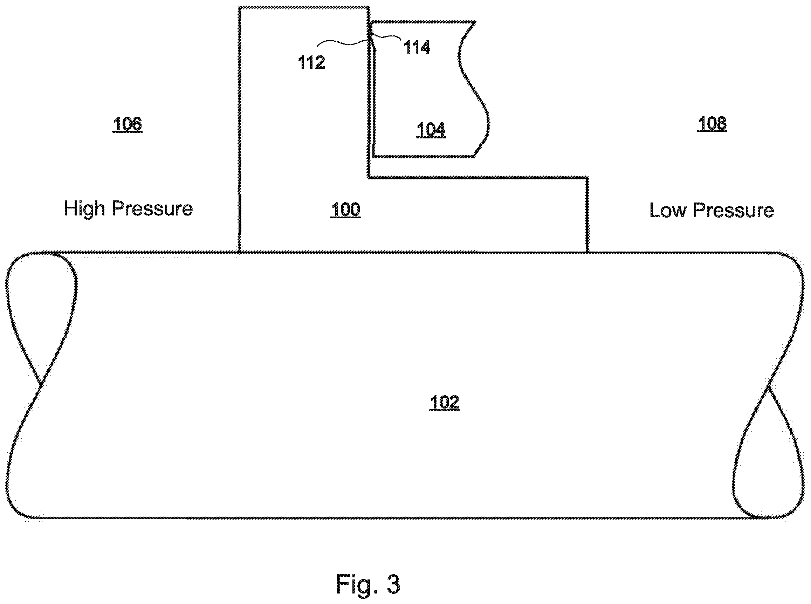

The embodiment of Fig. 1 is configured axially, whereby the stationary seal face 114 is the inner diameter of a stationary component 104 that surrounds a shaft 102, while the rotary seal face 112 is the outer diameter of a rotating component 100 that surrounds and is fixed to the shaft 102. In the embodiment of Fig. 3, the seal faces 112, 114 are configured radially, whereby the seal faces 112, 114 are axially adjacent to each other, with one sealing ring 100 being attached and sealed to the rotating shaft 102, and the other sealing ring 104 being attached and sealed to the stationary assembly.

### Principle of Operation

With reference again to Fig. 2, in each converging-diverging section 116 of the disclosed seal, the compressible fluid is first accelerated within the converging segment 200 as the gap 110 narrows, until it reaches a minimum gap clearance 206. At this location, the fluid reaches a "choked" condition, where the fluid velocity cannot increase beyond Mach 1. As the fluid enters the diverging segment 202, the gap 110 widens, further accelerating the flow to a supersonic condition, whereupon back-pressure imposed by downstream sections induce a standing normal shockwave 204 in the diverging segment 202. Although the static pressure of the fluid 210 after the shockwave is much higher than the static pressure immediately upstream of the shockwave 208, the stagnation pressure of the fluid 210 is greatly reduced, and is a function of the maximum Mach number that is reached in the diverging segment 202 before the shock wave 204. The amount of pressure drop in each section is therefore limited by the maximum Mach number that is achievable in each section.

In some embodiments, a Mach number of 4 or higher can tend to result in dissociation of the fluid within the shockwave and along the walls, and may begin to cause significant viscous heating effects on the walls. Accordingly, embodiments are designed such that the maximum Mach number of each section is 3 or less. Under these conditions, each section results in a pressure drop of approximately 50%. Thus, to achieve a desired pressure drop across the seal faces, the number of converging-diverging sections is selected according to the requirements of the embodiment, with higher sealed fluid pressures typically requiring a greater number of converging-diverging sections.

In embodiments, the amount of fluid leakage through the seal is determined by the first converging-diverging section's minimum gap width and area.

Referring again to Fig. 1, if it is desirable to combine the disclosed shockwave pressure reduction mechanism with viscous-effect pressure reduction, then the seal faces 112, 114 can be extended downstream 108 of the converging-diverging sections 116, 118, 120 so as to create two sealing regions 122, 124, wherein the first sealing region 122 includes the converging-diverging sections that reduce fluid pressure by inducing shock waves 206, and the second sealing region 124 further reduces the fluid pressure due to viscous dissipation within the seal face gap 110, in the manner of a conventional mechanical seal.

Similarly, a seal operating according to the principles disclosed herein can be used as a "pre-conditioner," much like a throttle bushing, in combination with a conventional downstream fluid seal. In this way, a seal of the present invention can be used to enable existing seal technology that is well proven for sealing fluids at lower pressures to be applied in ultra-high pressure applications.

### Advantages

The present invention provides at least two significant technical advantages as compared to prior art mechanical seals. The first is the significant reduction in viscous heating associated with the action of the shockwaves that reduce the fluid pressure. Although some viscous heating is unavoidable due to the small gap clearances required by the invention, the principle by which the invention operates does not depend upon viscous effects (other than the shockwaves) to reduce the fluid pressure, and so embodiments can be designed to minimize viscous heating. The second advantage is the short length scale of the converging-diverging seal features, which can allow the seal faces to be scaled to very small sizes, reducing material costs and product envelopes.

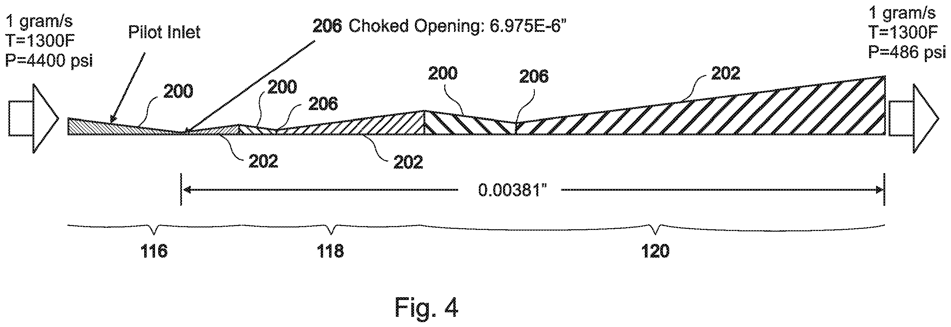

In the embodiment of Fig. 4, for example, a radial embodiment is illustrated that is suitable for CO2 at 1300 degrees Fahrenheit and 4400 psi pressure, with a flow rate through the gap 110 of 1 gram per second. The choked opening 206 in this embodiment is 6.975 millionths of an inch wide, and the distance from the first choked opening 206 to the low pressure end of the converging-diverging architecture is 3.81 thousandths of an inch.

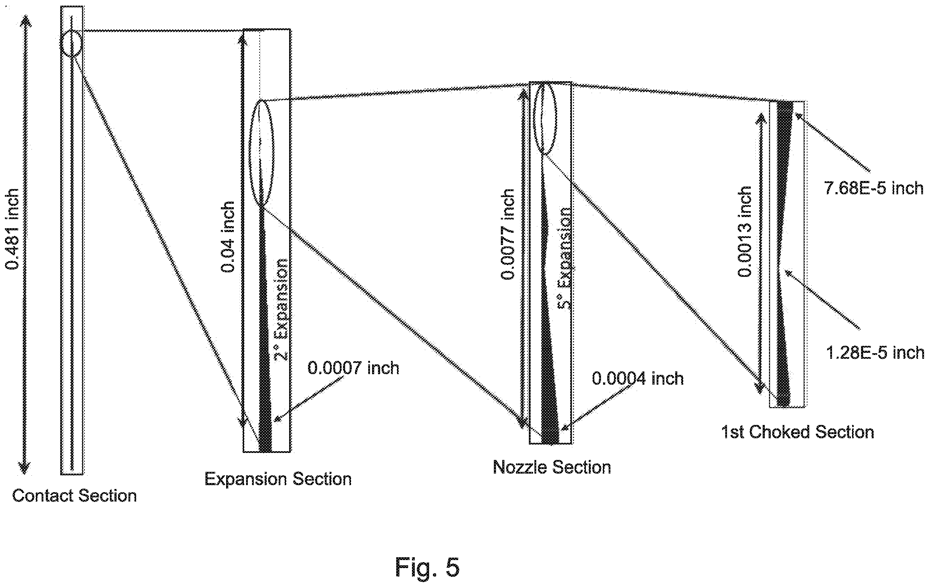

Fig. 5 illustrates dimensions of the gap 110 in a radial embodiment, where the fluid flow is from top to bottom in the figure. Fig's 6A and 6B present results of a flow simulation of an axial configuration similar to Fig. 5.

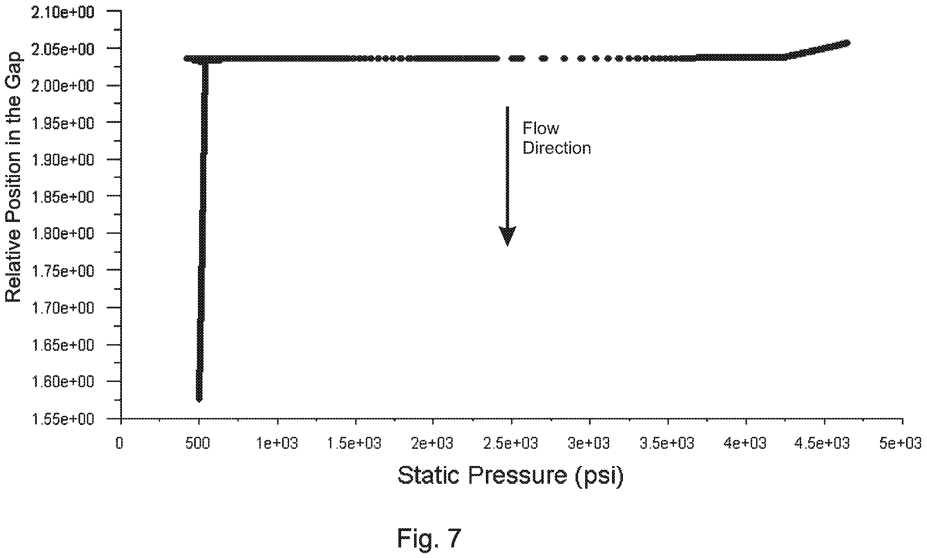

Fig. 7 is a graph that illustrates the pressure loss across the sealing surface in the simulation of Fig's 6A and 6B. The flow is from top to bottom. Note that nearly all of the pressure loss occurs almost immediately (at the top), coinciding with the contoured region of the converging-diverging sections.

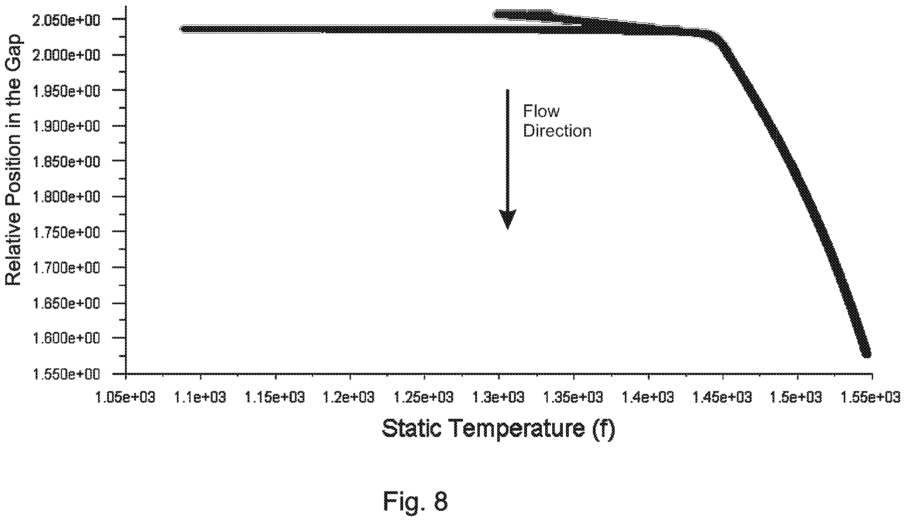

Fig. 8 is a graph that illustrates changes in temperature across the sealing surface of the simulation of Fig's 6A and 6B. The walls are considered to be adiabatic in this simulation, such that the result represents the highest possible temperatures. Close clearances at the top lead to high viscous heating and rapid temperature increases. These temperature increases can be controlled by increasing the clearance at the inlet and outlet, since the performance of the seal is not strongly dependent upon the clearance at the inlet and outlet of the contoured region of the gap. Other approaches to controlling the temperature included in various embodiments include selecting thermally conductive materials and/or active thermal management, e.g. by utilizing a cooling liquid.

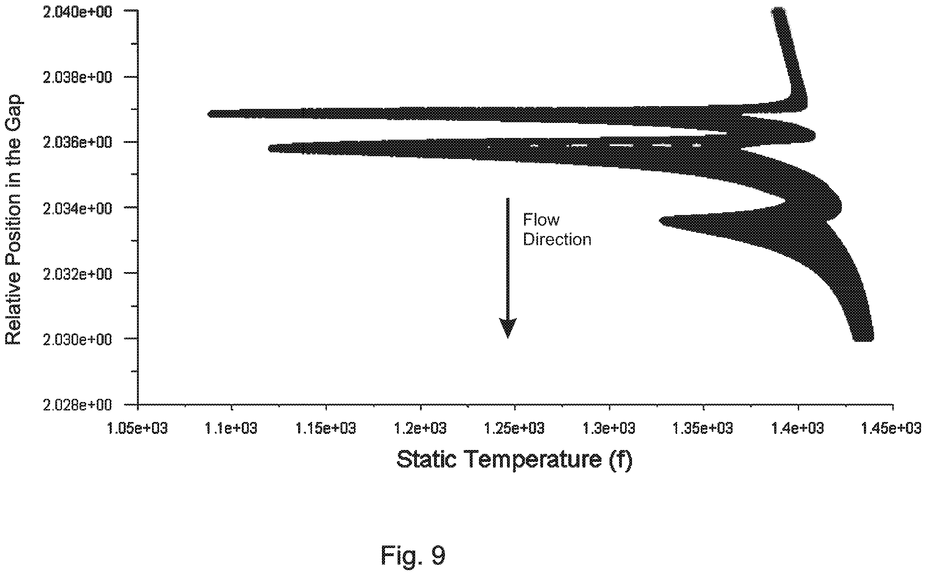

Fig. 9 is an expansion of the graph of Fig. 8 in the contoured region of the converging-diverging sections. Note that the temperature increase is only about 40 degrees Fahrenheit in this region, as compared to 250 degrees Fahrenheit overall. Much of this temperature increase is due to viscous heating, while the action of the shockwaves does comparatively little to increase the temperature.

The foregoing description of the embodiments of the invention has been presented for the purposes of illustration and description. Each and every page of this submission, and all contents thereon, however characterized, identified, or numbered, is considered a substantive part of this application for all purposes, irrespective of form or placement within the application.

The invention illustratively disclosed herein suitably may be practiced in the absence of any element which is not specifically disclosed herein and is not inherently necessary. However, this specification is not intended to be exhaustive. Although the present application is shown in a limited number of forms, the scope of the invention is not limited to just these forms, but is amenable to various changes and modifications without departing from the scope of the claims. One of ordinary skill in the art should appreciate after learning the teachings related to the claimed subject matter contained in the foregoing description that many modifications and variations are possible in light of this disclosure. Accordingly, the claimed subject matter includes any combination of the above-described elements in all possible variations thereof, unless otherwise indicated herein or otherwise clearly contradicted by context. In particular, the limitations presented in dependent claims below can be combined with their corresponding independent claims in any number and in any order without departing from the scope of this disclosure, unless the dependent claims are logically incompatible with each other.

## Claims

1. A mechanical seal configured for sealing a pressurized, compressible fluid within a sealed volume (106), the seal comprising:
a rotating sealing ring (100) surrounding a rotating shaft (102), the rotating sealing ring (100) being rotationally cooperative with and sealed to the rotating shaft (102);
a stationary sealing ring (104) cooperative with and sealed to a housing that is penetrated by the rotating shaft (102), a stationary seal face (114) of the stationary sealing ring (104) being substantially parallel to a rotating seal face (112) of the rotating sealing ring (100), the rotating and stationary seal faces (112, 114) being separated by a seal gap (110) such that the compressible fluid can only escape from the sealed volume (106) by passing through the seal gap (110); **characterized in that** said seal further comprises:
at least one shock inducing section (116, 118, 120) included in the seal gap (110), the shock-inducing section (116, 118, 120) including a converging segment (200) within which a cross section of the seal gap (110) narrows followed by a diverging segment (202) within which the seal gap (110) widens, so that a local minimum in seal gap width, referred to herein as a "choke point," is formed between the converging segment (200) and the diverging segment (202);
the converging and diverging segments (200, 202) being configured to cause the compressible fluid when flowing radially or axially outward through the seal gap (110) to be accelerated within the shock-inducing section (116, 118, 120) into a supersonic state, so that a shockwave (204) is formed by the fluid within the diverging segment (202), thereby reducing a stagnation pressure of the fluid.

2. The seal of claim 1, wherein the seal gap (110) includes a plurality of adjacent shock-inducing sections (116, 118, 120).

3. The seal of claim 1 or claim 2, wherein at least one of the narrowing and widening of each segment of each shock-inducing section (116, 118, 120) is due to shaping of at least one of the rotating seal face (112) and the stationary seal face (114).

4. The seal of any preceding claim, wherein a combined width of the shock-inducing sections (116, 118, 120) is between 0.004 inches and 0.008 inches.

5. The seal of any preceding claim, wherein the shock-inducing sections (116, 118, 120) are located proximal to a boundary of the seal gap (110) where the pressurized fluid enters the seal gap (110).

6. The seal of any preceding claim, wherein the mechanical seal is axially configured, such that the seal faces (112, 114) are parallel to the rotating shaft (102), the rotating seal face (112) being radially inward of the stationary seal face (114).

7. The seal of any of claims 1-5, wherein the mechanical seal is radially configured, such that the seal faces (112, 114) are perpendicular to the rotating shaft (102), the rotating and stationary faces (112, 114) being axially offset from each other.

8. The seal of any preceding claim, wherein the shock-inducing sections (116, 118, 120) are configured to cause fluid flowing outward through the seal gap (110) to be accelerated into a supersonic state having a Mach number of less than 4.

9. The seal of any preceding claim, further comprising a concentric, viscosity-inducing section included in the seal gap (110) outward from the at least one shock-inducing section (116, 118, 120), the seal faces (112, 114) in the viscosity-inducing section being flat and parallel to each other, and being configured to induce viscous stresses on the fluid within the seal gap (110), thereby further reducing the stagnation pressure of the fluid.

## Patentansprüche

1. Mechanische Dichtung, die dafür ausgelegt ist, ein unter Druck stehendes, komprimierbares Fluid innerhalb eines abgedichteten Volumens (106) abzudichten, wobei die Dichtung umfasst:
einen rotierenden Dichtungsring (100), der eine rotierende Welle (102) umgibt, worin der rotierende Dichtungsring (100) rotationsmäßig zusammenwirkend mit und an der rotierenden Welle (102) abgedichtet ist;
einen ortsfesten Dichtungsring (104), der zusammenwirkend mit und an einem Gehäuse abgedichtet ist, das von der rotierenden Welle (102) durchdrungen ist, wobei eine ortsfeste Dichtungsfläche (114) des ortsfesten Dichtungsrings (104) im Wesentlichen zu einer rotierenden Dichtungsfläche (112) des rotierenden Dichtungsrings (100) parallel ist, wobei die rotierende und die ortsfeste Dichtungsfläche (112, 114) von einem Dichtungsspalt (110) so getrennt sind, dass das komprimierbare Fluid vom abgedichteten Volumen (106) nur dadurch austreten kann, dass es durch den Dichtungsspalt (110) durchtritt; **dadurch gekennzeichnet, dass** die genannte Dichtung ferner umfasst:
zumindest einen stoßinduzierenden Abschnitt (116, 118, 120), der im Dichtungsspalt (110) umfasst ist, wobei der stoßinduzierende Abschnitt (116, 118, 120) ein konvergierendes Segment (200) umfasst, innerhalb dessen ein Querschnitt des Dichtungsspaltes (110) sich verengt, von einem divergierenden Segment (202) gefolgt, innerhalb dessen der Dichtungsspalt (110) sich weitet, so dass ein lokales Minimum in der Dichtungsspaltbreite, das hier als "Drosselstelle" bezeichnet wird, zwischen dem konvergierenden Segment (200) und dem divergierenden Segment (202) ausgebildet wird;
die konvergierenden und divergierenden Segmente (200, 202) dafür ausgelegt sind, um zu bewirken, dass das komprimierbare Fluid, wenn es radial oder axial nach außen durch den Dichtungsspalt (110) strömt, innerhalb des stoßinduzierenden Abschnitts (116, 118, 120) in einen Überschallzustand beschleunigt wird, so dass eine Stoßwelle (204) vom Fluid innerhalb des divergierenden Segments (202) gebildet wird, wodurch ein Stagnationsdruck des Fluids reduziert wird.

2. Dichtung nach Anspruch 1, worin der Dichtungsspalt (110) eine Vielzahl von angrenzenden stoßinduzierenden Abschnitten (116, 118, 120) umfasst.

3. Dichtung nach Anspruch 1 oder nach Anspruch 2, worin zumindest eine von der Verengung und der Aufweitung jedes Segmentes jedes stoßinduzierenden Abschnittes (116, 118, 120) auf die Formung von zumindest einer der rotierenden Dichtungsfläche (112) und der ortsfesten Dichtungsfläche (114) zurückzuführen ist.

4. Dichtung nach einem der vorhergehenden Ansprüche, worin eine kombinierte Breite der stoßinduzierenden Abschnitte (116, 118, 120) zwischen 0,004 Zoll und 0,008 Zoll beträgt.

5. Dichtung nach einem der vorhergehenden Ansprüche, worin die stoßinduzierenden Abschnitte (116, 118, 120) proximal zu einer Grenze des Dichtungsspaltes (110) angeordnet sind, wo das unter Druck stehende Fluid in den Dichtungsspalt (110) eintritt.

6. Dichtung nach einem der vorhergehenden Ansprüche, worin die mechanische Dichtung axial gestaltet ist, so dass die Dichtungsflächen (112, 114) zur rotierenden Welle (102) parallel sind, wobei die rotierende Dichtungsfläche (112) radial einwärts von der ortsfesten Dichtungsfläche (114) liegt.

7. Dichtung nach einem der Ansprüche 1-5, worin die mechanische Dichtung radial gestaltet ist, so dass die Dichtungsflächen (112, 114) zur rotierenden Welle (102) senkrecht sind, wobei die rotierenden und ortsfesten Flächen (112, 114) voneinander axial versetzt sind.

8. Dichtung nach einem der vorhergehenden Ansprüche, worin die stoßinduzierenden Abschnitte (116, 118, 120) dafür ausgelegt sind, um zu bewirken, dass das Fluid, das nach außen durch den Dichtungsspalt (110) strömt, in einen Überschallzustand beschleunigt wird, der eine Mach-Zahl von weniger als 4 hat.

9. Dichtung nach einem der vorhergehenden Ansprüche, ferner umfassend einen konzentrischen, viskositätsinduzierenden Abschnitt, der im Dichtungsspalt (110) nach außen von dem zumindest einen stoßinduzierenden Abschnitt (116, 118, 120) umfasst ist, worin die Dichtungsflächen (112, 114) im viskositätsinduzierenden Abschnitt flach und parallel zueinander sind, und dafür ausgelegt sind, viskose Spannungen auf das Fluid innerhalb des Dichtungsspaltes (110) zu induzieren, wodurch der Stagnationsdruck des Fluids ferner reduziert wird.

## Revendications

1. Joint mécanique configuré pour sceller un fluide compressible sous pression à l'intérieur d'un volume scellé (106), le joint comprenant :
une bague d'étanchéité rotative (100) entourant un arbre tournant (102), la bague d'étanchéité rotative (100) coopérant de manière rotative avec l'arbre tournant (102) et étant scellée à celui-ci ;
une bague d'étanchéité fixe (104) coopérant avec et scellée à un logement qui est pénétré par l'arbre tournant (102), une face de joint fixe (114) de la bague d'étanchéité fixe (104) étant sensiblement parallèle à une face de joint rotative (112) de la bague d'étanchéité rotative (100), les faces de joint rotative et fixe (112, 114) étant séparées par un espace de joint (110) de sorte que le fluide compressible ne puisse s'échapper du volume scellé (106) qu'en passant à travers l'espace de joint (110) ; **caractérisé en ce que** ledit joint comprend en outre :
au moins une section d'induction de chocs (116, 118, 120) incluse dans l'espace de joint (110), la section d'induction de chocs (116, 118, 120) comprenant un segment convergent (200) à l'intérieur duquel une section transversale de l'espace de joint (110) se rétrécit suivie d'un segment divergent (202) à l'intérieur duquel l'espace de joint (110) s'élargit, de sorte qu'un minimum local de largeur d'espace de joint, appelé ici « point d'étranglement », est formé entre le segment convergent (200) et le segment divergent (202) ;
les segments convergent et divergent (200, 202) étant configurés pour amener le fluide compressible lorsqu'il s'écoule radialement ou axialement vers l'extérieur à travers l'espace de joint (110) à être accéléré à l'intérieur de la section d'induction de chocs (116, 118, 120) dans un état supersonique, de sorte qu'une onde de choc (204) soit formée par le fluide à l'intérieur du segment divergent (202), réduisant ainsi une pression de stagnation du fluide.

2. Joint selon la revendication 1, dans lequel l'espace de joint (110) comprend une pluralité de sections d'induction de chocs adjacentes (116, 118, 120).

3. Joint d'étanchéité selon la revendication 1 ou la revendication 2, dans lequel au moins l'un du rétrécissement et de l'élargissement de chaque segment de chaque section d'induction de chocs (116, 118, 120) est dû à la mise en forme d'au moins l'une de la face de joint rotative (112) et de la face de joint fixe (114).

4. Joint selon l'une quelconque des revendications précédentes, dans lequel une largeur combinée des sections d'induction de chocs (116, 118, 120) est comprise entre 0,004 pouce et 0,008 pouce.

5. Joint selon l'une quelconque des revendications précédentes, dans lequel les sections d'induction de chocs (116, 118, 120) sont situées à proximité d'une limite de l'espace de joint (110) où le fluide sous pression pénètre dans l'espace de joint (110).

6. Joint selon l'une quelconque des revendications précédentes, dans lequel le joint mécanique est configuré axialement, de sorte que les faces de joint (112, 114) soient parallèles à l'arbre tournant (102), la face de joint rotative (112) étant radialement vers l'intérieur de la face de joint fixe (114).

7. Joint selon l'une quelconque des revendications 1 à 5, dans lequel le joint mécanique est configuré radialement, de sorte que les faces de joint (112, 114) soient perpendiculaires à l'arbre tournant (102), les faces rotative et fixe (112, 114) étant décalées axialement l'une par rapport à l'autre.

8. Joint selon l'une quelconque des revendications précédentes, dans lequel les sections d'induction de chocs (116, 118, 120) sont configurées pour amener le fluide s'écoulant vers l'extérieur à travers l'espace de joint (110) à être accéléré dans un état supersonique ayant un nombre de Mach inférieur à 4.

9. Joint selon l'une quelconque des revendications précédentes, comprenant en outre une section concentrique d'induction de viscosité comprise dans l'espace de joint (110) vers l'extérieur à partir de l'au moins une section d'induction de chocs (116, 118, 120), les faces de joint (112, 114) dans la section d'induction de viscosité étant plates et parallèles l'une à l'autre, et étant configurées pour induire des contraintes visqueuses sur le fluide à l'intérieur de l'espace de joint (110), réduisant ainsi encore la pression de stagnation du fluide.
